# EUROPEAN PATENT APPLICATION

(11) **EP 2 698 716 A2**
(43) Date of publication of application: **19.02.2014**
(21) Application number: 13168016.7
(22) Date of filing: 16.05.2013
(51) Int. Cl.: G06F 11/07

(54) **Failure detecting device, failure detecting method, and failure detecting program**

(30) Priority: 05.07.2012 JP 2012151794
(71) Applicant: FUJITSU LIMITED, Kawasaki-shi, Kanagawa 211-8588 (JP)
(72) Inventor: Yuuki, Kazuhiro, Kanagawa, 211-8588 (JP)
(74) Representative: HOFFMANN EITLE

(57) **Abstract**

A failure detecting device (10) includes a detecting unit (11) that detects the failure of a component. The failure detecting device (10) includes an acquiring unit (16) that acquires propagation information about a component in which the first failure has been detected and a standby time about the component in which the first failure has been detected. The failure detecting device (10) includes a determining unit (17) that determines notification candidates including a component in which a failure has been detected first and a component in which a new failure has been detected before the standby time has elapsed. The failure detecting device (10) includes a notifying unit (19) that notifies, from among the notification candidates, a user of a component that is not included in the propagation information after the standby time has elapsed.

## Description

The embodiments discussed herein are directed to a failure detecting device, a failure detecting method, and a failure detecting program.

### BACKGROUND

There is a known conventional technology that improves the availability of an information processing apparatus by reducing the Mean Time To Repair (MTTR) when a failure is detected in a component in the information processing apparatus.

If a component in an information processing apparatus, for example, fails, the failure propagates to other components. However, if the component that is the source of the failure (hereinafter, failure-source component) is specified by replacing all of the components in which a failure has been detected or by replacing, one by one, each component in which a failure has been detected, the cost of maintenance materials or the maintenance time increases. There is a known failure detecting device that prevents this cost or maintenance time from increasing. When a failure is detected in a component in an information processing apparatus, the known failure detecting device specifies the failure-source component from the nature of the failure that has been detected and issues a report about only the specified component.

For example, the failure detecting device previously stores therein a hierarchical pattern of the propagation of a failure to another component when a first component fails. If the failure detecting device detects a failure in any component, the failure detecting device stands by a given period of time until the failure propagates to other components. Then, by comparing the failure-propagation pattern of a component in which a failure is detected after the standby time with previously stored failure-propagation patterns of all the components, the failure detecting device specifies the failure-source component and issues a report about the specified component.
Patent Document 1: Japanese Laid-open Patent Publication No. 2002-125006

However, there is a problem with the technology that specifies a failure-source component by comparing the failure-propagation pattern of a component in which a failure has been detected with a previously stored pattern of a component in that, whichever component fails, it needs to stand by a certain period of time for it be specified; therefore, the failure-source component is not efficiently detected.

Furthermore, if the standby time is shorter than the time it takes a failure to propagate to another component, the failure detecting device is not able to detect all of the propagated failures; therefore, the failure detecting device is not able to appropriately detect a failure-source component. If the standby time is longer than the time it takes a failure to propagate to another component, there is a delay in the failure detecting device issuing a report about the failure-source component.

Furthermore, in order to determine whether multiple failures have occurred due to multiple failure-source components being present, the failure detecting device compares, for each hierarchy in descending order in the failure-propagation patterns, the failure-propagation patterns of failed components with previously stored patterns of all the components. Consequently, it takes a long time to perform an analyzing process for specifying failure-source components.

Accordingly, it is an object in one aspect of an embodiment of the invention to efficiently specify a failure-source component.

### SUMMARY

According to an aspect of an embodiment, a failure detecting device includes a storing unit that stores, for each component, propagation information indicating, when one of the components included in an information processing apparatus fails, the other components to which the failure propagates, and a standby time for standing by, when the one of the components fails, until the failure propagates to the other components. The failure detecting device includes a detecting unit that detects the failure of a component. The failure detecting device includes an acquiring unit that acquires, when a first failure was detected by the detecting unit, propagation information stored by the storing unit about a component in which the first failure has been detected and a standby time stored by the storing unit about the component in which the first failure has been detected. The failure detecting device includes a determining unit that determines notification candidates including a component in which a failure has been detected first by the detecting unit and a component in which a new failure has been detected by the detecting unit before the standby time acquired by the acquiring unit has elapsed. The failure detecting device includes a notifying unit that notifies, as a failed component from among the notification candidates determined by the determining unit a user of a component that is not included in the propagation information acquired by the acquiring unit after the standby time has elapsed.

### BRIEF DESCRIPTION OF DRAWINGS

FIG. 1 is a schematic diagram illustrating the functional configuration of a failure point detecting device according to a first embodiment;
FIG. 2 is a schematic diagram illustrating an example of a component code conversion table;
FIG. 3 is a schematic diagram illustrating an example of a failure analysis database;
FIG. 4 is a schematic diagram illustrating the relationship between a failure source and a dependent failure;
FIG. 5 is a schematic diagram illustrating an example of a weighting that is given to each component;
FIG. 6 is a table illustrating an example of priority;
FIG. 7 is a table illustrating an example of a standby time table;
FIG. 8 is a schematic diagram illustrating a standby time;
FIG. 9 is a schematic diagram illustrating an example of the standby time;
FIG. 10 is a flowchart illustrating the flow of a process performed by the failure point detecting device;
FIG. 11 is a flowchart illustrating the flow of a process that is performed by a failure detecting unit and that detects a failure;
FIG. 12 is a flowchart illustrating the flow of a process performed by a failure analyzing unit;
FIG. 13 is a flowchart illustrating the flow of a process performed during a counting;
FIG. 14 is a flowchart illustrating the flow of a process that determines the minimum replacement target in accordance with priority; and
FIG. 15 is a block diagram illustrating an example of a computer that executes a failure detecting program.

### DESCRIPTION OF EMBODIMENTS

Preferred embodiments of the present invention will be explained with reference to accompanying drawings.

### [a] First Embodiment

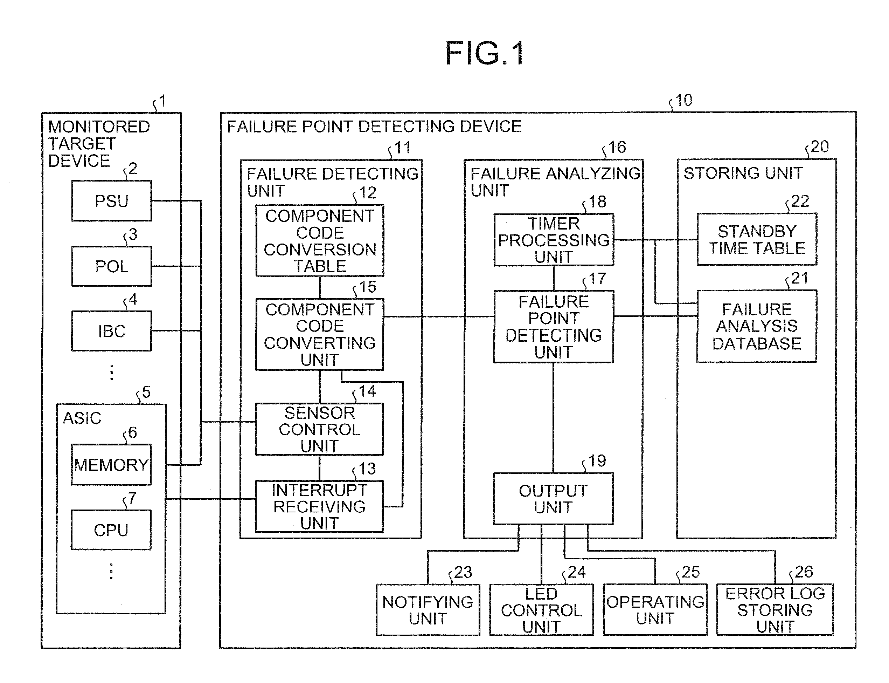

In a first embodiment described below, an example of a failure point detecting device will be described with reference to FIG. 1. FIG. 1 is a schematic diagram illustrating the functional configuration of a failure point detecting device according to a first embodiment. A failure point detecting device 10 illustrated in FIG. 1 is at least connected to a monitored target device 1, such as an information processing apparatus, and has a function of detecting a failure in a component in the monitored target device 1.

As illustrated in FIG. 1, the monitored target device 1 includes a power supply unit (PSU) 2, a point of load (POL converter) 3, and an intermediate bus converter (IBC) 4. Furthermore, the monitored target device 1 includes an application specific integrated circuit (ASIC) 5. The ASIC 5 includes a memory 6 and a central processing unit (CPU) 7.

Here, the PSU 2 is a power supply device that supplies electrical power to the entire of the monitored target device 1 and is a component positioned at the highest hierarchical level, which is obtained when the connection relationship of the power supply system included in the monitored target device 1 is hierarchicalized. Furthermore, the POL 3 is a converter that decreases the DC voltage supplied from the PSU 2 to a voltage in accordance with the electrical power to be supplied. The IBC 4 is a converter that converts the electrical power supplied by the PSU 2 or the POL 3 to a voltage in accordance with the standard of a bus included in the monitored target device 1. The ASIC 5 is an electronic circuit that manages components included in the monitored target device 1. The memory 6 is a storage device that stores therein data or the like that is used by the ASIC 5 for processing. The CPU 7 is an arithmetic processing unit that executes arithmetic processing that is performed by the ASIC 5.

Although not illustrated in FIG. 1, the monitored target device 1 further includes a device that has the same functions as those performed by the PSU 2, the POL 3, the IBC 4, and the ASIC 5. Furthermore, the monitored target device 1 includes various components (not illustrated) that are monitored by the failure point detecting device 10, such as a cooling fan or a water cooler that cools the monitored target device 1.

In contrast, the failure point detecting device 10 includes a failure detecting unit 11, a failure analyzing unit 16, a storing unit 20, a notifying unit 23, a light emitting diode (LED) control unit 24, an operating unit 25, and an error log storing unit 26. The failure detecting unit 11 includes a component code conversion table 12, an interrupt receiving unit 13, a sensor control unit 14, and a component code converting unit 15. The failure analyzing unit 16 includes a failure point detecting unit 17, a timer processing unit 18, and an output unit 19. The storing unit 20 stores therein a failure analysis database 21 and a standby time table 22.

In the following, a function performed by the failure point detecting device 10 will be described. The storing unit 20 stores therein the failure analysis database 21 that indicates, if a component fails, another component to which the failure propagates. Furthermore, the storing unit 20 stores therein the standby time table 22 that indicates, if a component fails, the standby time for standing by until the failure propagates to another component. The failure detecting unit 11 monitors each component 2 to 7 included in the monitored target device 1. If any of the components 2 to 7 fails, the failure detecting unit 11 notifies the failure analyzing unit 16 of the failed component.

If the failure analyzing unit 16 receives a notification of the failed component from the failure detecting unit 11, the failure analyzing unit 16 refers to the failure analysis database 21 to identify a component to which the failure propagates and refers to the standby time table 22 to identify a standby time in accordance with the failed component. Furthermore, the failure analyzing unit 16 identifies components, in which failures have been detected by the failure detecting unit 11, until the identified period of standby time elapses. Then, after the standby time has elapsed, the failure analyzing unit 16 specifies, from among the components notified by the failure detecting unit 11, a failure-source component, i.e., a component except for the component identified from the failure analysis database 21. Then, the failure analyzing unit 16 reports the specified component.

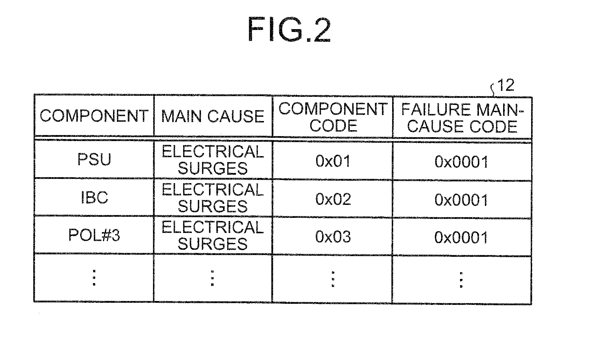

In the following, a process performed by the component code conversion table 12, the interrupt receiving unit 13, the sensor control unit 14, and the component code converting unit 15 included in the failure detecting unit 11 will be described. First, an example of the component code conversion table 12 will be described with reference to FIG. 2.

FIG. 2 is a schematic diagram illustrating an example of a component code conversion table. In the example illustrated in FIG. 2, the component code conversion table 12 stores therein, in an associated manner, a component, a main cause, a component code, and a failure main-cause code. For example, in the example illustrated in FIG. 2, the component code conversion table 12 stores therein, in an associated manner, the component "PSU", the main cause of a failure "electrical surges", the component code "0x01", and the failure main-cause code "0x0001".

Furthermore, in the example illustrated in FIG. 2, the component code conversion table 12 stores therein, in an associated manner, the component "IBC", the main cause of a failure "electrical surges", the component code "0x02", and the failure main-cause code "0x0001". Furthermore, in the example illustrated in FIG. 2, the component code conversion table 12 stores therein, in an associated manner, the component "POL #3", the main cause of a failure "electrical surges", the component code "0x03", and the failure main-cause code "0x0001".

A description will be given here by referring back to FIG. 1. The interrupt receiving unit 13 receives an interruption notification issued by the ASIC 5. Specifically, the interrupt receiving unit 13 receives, from the ASIC 5, an interruption notification, indicating that one of the components 2 to 7 included in the monitored target device 1 has failed. Then, the interrupt receiving unit 13 analyzes the interruption notification and identifies the failed component. Then, the interrupt receiving unit 13 notifies both the sensor control unit 14 and the component code converting unit 15 of the failed component.

The sensor control unit 14 controls a sensor arranged in each of the components 2 to 7 included in the monitored target device 1. For example, if the sensor control unit 14 receives a notification indicating a component from the interrupt receiving unit 13, the sensor control unit 14 controls the sensor of the component indicated in the notification and monitors the state of the component. Then, the sensor control unit 14 specifies a failure main cause from the result of the monitoring and notifies the component code converting unit 15 of the specified failure main cause. For example, if the sensor control unit 14 receives a notification of the POL 3 from the interrupt receiving unit 13, the sensor control unit 14 monitors, for example, an output voltage of the POL 3. If an abnormality is detected in the voltage that is output from the POL 3, the sensor control unit 14 notifies the component code converting unit 15 that the occurrence of electrical surges is the failure main cause.

The component code converting unit 15 receives a notification indicating a failed component from the interrupt receiving unit 13. Furthermore, the component code converting unit 15 receives a notification indicating a failure main cause from the sensor control unit 14. Then, the component code converting unit 15 acquires, from the component code conversion table 12, both the failure main-cause code and a component code, which is associated with the component indicated in the notification and a failure main cause. The component code converting unit 15 then outputs the acquired component code and the failure main-cause code to the failure analyzing unit 16.

For example, the component code converting unit 15 receives, from the interrupt receiving unit 13, a notification that the POL 3 has failed and also receives, from the sensor control unit 14, a notification that electrical surges have occurred. Then, the component code converting unit 15 refers to the component code conversion table 12 and acquires the component code "0x03", which is associated with the component "POL 3" and the failure main cause "electrical surges", and the failure main-cause code "0x0001". Then, the component code converting unit 15 outputs the acquired component code "0x03" and failure main-cause code "0x0001" to the failure analyzing unit 16.

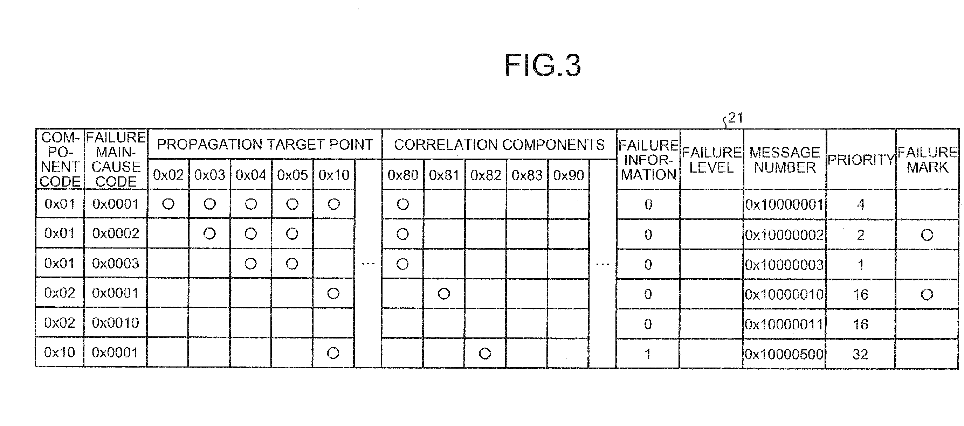

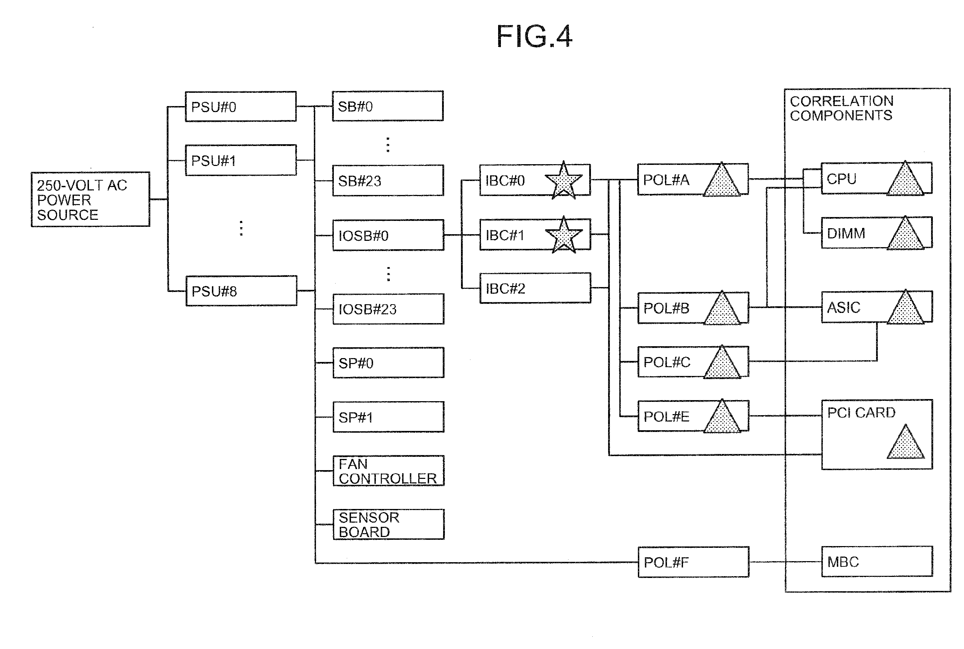

In the following, the contents of the failure analysis database 21 and the standby time table 22 stored in the storing unit 20 will be described with reference to FIGS. 3 to 9. First, the nature of the failure analysis database 21 will be described with reference to FIGS. 3 and 4.

FIG. 3 is a schematic diagram illustrating an example of a failure analysis database. As illustrated in FIG. 3, when a failure main cause indicated by the failure main-cause code occurs in a component indicated by a component code, the failure analysis database 21 stores therein, for each component code and failure main-cause code, an entry indicating another component to which the failure propagates.

For example, in the example illustrated in FIG. 3, the failure analysis database 21 stores therein, in an associated manner, a component code, a failure main-cause code, a propagation target point, correlation components, failure information, a failure level, a message number, priority, and a failure mark. The propagation target point mentioned here is information in which, when a failure main cause indicated by a failure main-cause code in an entry occurs in the component indicated by the component code in the same entry, another component to which the failure propagates is indicated by a component code.

Furthermore, in the example illustrated in FIG. 3, the failure analysis database 21 includes, as an area for storing a propagation target point, multiple areas each of which is associated with each component code. By storing a circle in an area associated with the component code that indicates a component to which the failure propagates, the failure analysis database 21 indicates the component to which the failure propagates. In the example illustrated in FIG. 3, if a failure indicated by the failure main-cause code "0x0001" occurs from the component indicated by the component code "0x01", the failure analysis database 21 indicates that the failure propagates to the components represented by the component codes "0x02", "0x03", "0x04", "0x05", and "0x10".

Furthermore, the correlation components mentioned here are components or devices that have a correlation with a failed component or a component to which the failure propagates, for example, a device, such as a CPU, to which electrical power is supplied by the failed component. In the example illustrated in FIG. 3, the failure analysis database 21 includes multiple areas associated with component codes indicating the correlation components and indicates that a failure propagates to the correlation components indicated by the component codes associated with the area represented by a circle.

Furthermore, in the example illustrated in FIG. 3, by storing a circle in an area associated with a component to which a failure propagates or with correlation components, the failure analysis database 21 indicates whether a failure propagates; however, the embodiment is not limited thereto. For example, the failure analysis database 21 may also determine whether a failure propagates by storing "1" in an area associated with a component to which the failure propagates or with correlation components or by storing "0" in an area associated with a component to which the failure does not propagate or with correlation components.,

In the following, the relationship between a failed component and a dependent failure will be described with reference to FIG. 4. FIG. 4 is a schematic diagram illustrating the relationship between a failure source and a dependent failure. FIG. 4 illustrates, in a hierarchical manner, the connection relationship between the power supply system in the monitored target device 1 and correlation components, such as CPUs, to which electrical power is supplied by the power supply system. For example, the monitored target device 1 includes a 250-volt AC power supply at the top level and supplies 250-volt AC power to nine PSUs #0 to #8.

Furthermore, the PSUs #0 to #8 supply electrical power to each of 24 service boards (SBs) #0 to #23 and to each of 24 input output service boards (IOSBs) #0 to #23. Furthermore, the PSUs #0 to #8 supply electrical power to a service processor (SP) #0, an SP #1, a FAN controller, a sensor board, and a POL #F.

The IOSB #0 supplies electrical power to the IBCs #0 to #2; and the IBCs #0 to #2 supply electrical power to the POLs #A to #E and to a peripheral component interconnect (PCI) card. The POL #A supplies electrical power to a CPU and a dual inline memory module (DIMM); and the POL #B supplies electrical power to the CPU and the ASIC. The POL #C supplies electrical power to the ASIC; the POL #E supplies electrical power to the PCI card; and the POL #F supplies electrical power to the memory bass controller (MBC).

When the monitored target device 1 includes the power supply system, which has the connection relationship illustrated in FIG. 4, and includes the correlation components, if a failure occurs in the IBC #0 and the IBC #1 represented by a star illustrated in FIG. 4, electrical power is not supplied to components in a level lower than that of the IBC #0 and the IBC #1. Specifically, if a failure occurs in both the IBC #0 and the IBC #1, electrical power is not supplied to the POLs #A to #E represented by a triangle illustrated in FIG. 4. Then, because the POLs #A to #E do not operate normally even though they have not failed, it is still determined that a failure has occurred.

Furthermore, there may be a case in which normal electrical power is not supplied both to the failed component and to the correlation components to which electrical power is supplied by a component in the lower level than that in the failed component and thus it is determined a failure has occurred. Specifically, because normal electrical power is not supplied to the CPU, the DIMM, the ASIC, and the PCI card represented by the triangle illustrated in FIG. 4, it may sometimes be determined that the CPU, the DIMM, the ASIC, and the PCI card have failed. Consequently, if a failure occurs in the power supply system in the monitored target device 1, a failure propagates to a component in a lower level than that of the failed component or propagates to the correlation components.

Furthermore, because the connection between the power supply system and the correlation components in the monitored target device 1 is redundant, components to which a failure propagates or the correlation components differ for each failed component. Furthermore, there may be a component to which a failure does not propagate depending on the failure main cause. Furthermore, if a failure is detected in each component, because a different threshold is set for each component, the time at which a failure is detected in each component varies. Consequently, the failure point detecting device 10 previously stores the failure analysis database 21 in which a component to which a failure propagates and the correlation components to which the failure propagates are defined for each failed component and failure main cause.

A description will be given here by referring back to FIG. 3. The failure information illustrated in FIG. 3 is information for issuing a report to a user about a failure indicated by an associated component code and a failure main-cause code and that indicates whether the component indicated by the associated component code has been replaced. For example, if the failure information is "1", this indicates that a failure indicated by the associated component code and failure main-cause code have been reported to a user; however, the failed component has not been replaced nor repaired. The failure level in FIG. 3 is information indicating the degree of a failure. For example, "ALARM" is stored for a component that has not been used, and "WARNING" is stored for a component that can be used but for which replacement is preferabl. Furthermore, the message number is a number defined in accordance with a failed component and a failure main cause and is a message number indicating a message stored in an error log.

The priority means information indicating the priority of issuing a report about the nature of a failure to a user. For example, a greater value is stored in the priority as the severity increases of the nature of a failure indicated by a component code and a failure main-cause code in the same entry. This priority can be calculated on the basis of the degree of severity of a failure of each component. For example, a value indicating the degree of severity of a failure of a component can be given to each component as a weighting and the sum of the values given to the components to which the failure propagates can be used for the priority.

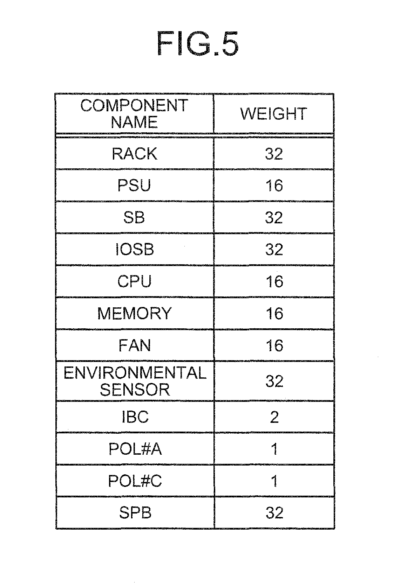

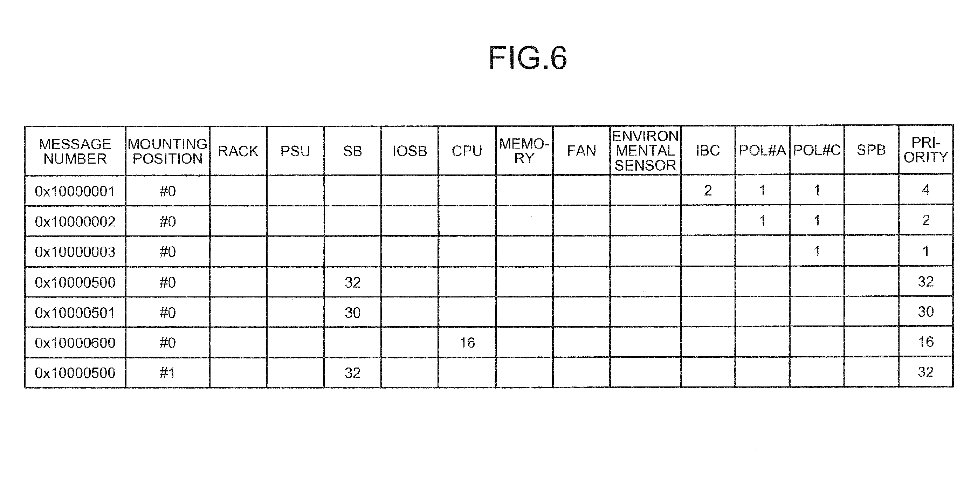

In the following, an example of a process for calculating a priority will be described with reference to FIGS. 5 and 6. First, an example of the weighting that is given to each component will be described with reference to FIG. 5. FIG. 5 is a schematic diagram illustrating an example of the weighting that is given to each component. In the example illustrated in FIG. 5, a weighting is given to a rack, a PSU, an SB, an IOSB, a CPU, a memory, a FAN, an environmental sensor, an IBC, the POL #A, the POL #C, and an SPB.

For example, a maximum value of "32" is given, as the weighting, to the components, such as the rack, the SB, the IOSB, the environmental sensor, the SPB, and the like, with which there is a high possibility that the system stops when a failure occurs. Furthermore, the value "16" is given, as the weighting, to the components, such as the PSU, the CPU, the memory, the FAN, and the like, with which the possibility of the system stopping when a failure occurs is low but an operational problem still occurs, such as the performance being significantly degraded or data recovery being difficult. Furthermore, the value "15" or below is given, as the weighting, to a component, such as the IBC, the POL #A, the POL #C, and the like, for which a failure is not an urgent situation or that has redundancy but a failure of which is still preferably not left as it is.

In the following, an example of a process for calculating the priority by using the weighting given to each component will be described with reference to FIG. 6. FIG. 6 is a table illustrating an example of priority. For example, the table illustrated in FIG. 6 contains therein, in an associated manner, a message number and the mounting position at which a failed component is mounted when a failure having the nature represented by the message number occurs. Furthermore, in this table, multiple areas, which are associated with components, are associated with the message numbers. When a failure indicated by a message number has occurred, a value of the weighting is stored in an area that is associated with a component to which the failure propagates.

Then, the sum of the values stored in the areas that are associated with message numbers is used as a priority. Consequently, a high priority can be given to a serious failure, i.e., a failure involving many components to which the failure propagates and with which the possibility of the system stopping is high. For example, for the failure represented by the message number "0x10000001", the value of "4" is given as the priority, which is the sum of the weighting "2" given to the IBC and the weighting "1" given to both the POL #A and the POL #C. Furthermore, if a failure represented by the message number "0x10000500" occurs, because the failure propagates to the SB, the value "32" is given to the priority.

As described above, by weighting in accordance with the degree of severity when a failure occurs in each component and by calculating the sum of the weightings given to components to which the failure propagates, it is possible to calculate the priority to be issued as a notification when a failure occurs.

A description will be given here by referring back to FIG. 3. The failure mark means information indicating a failure main cause and a component in which the failure detecting unit 11 detects a failure. If a failure has been detected, a circle is stored. For example, the failure analyzing unit 16 stores a circle in a failure mark of an entry that is associated with both a failure main cause and a component in which the failure detecting unit 11 detects a failure until a standby time has elapsed.

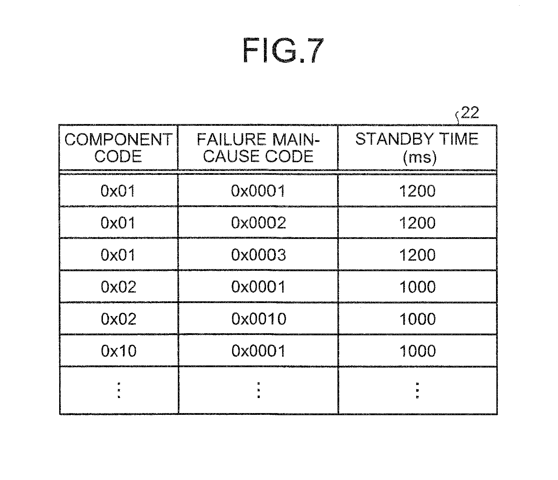

In the following, an example of the standby time table 22 will be described with reference to FIGS. 7 to 9. FIG. 7 is a table illustrating an example of a standby time table. As illustrated in FIG. 7, the standby time table 22 stores therein, in an associated manner, a component code, a failure main-cause code, and a standby time. The standby time mentioned here means the period of time to stand by a process, performed by the failure analyzing unit 16, for determining, whether, if a failure represented by the failure main-cause code occurs in a component represented by the component code for which both are in the same entry, the detected failure is the source of the failure or a propagated failure.

For example, in the example illustrated in FIG. 7, if a failure represented by the failure main-cause code "0x0001" occurs in the component represented by the component code "0x01", the standby time table 22 indicates that the standby time is "1200" milliseconds. Furthermore, in the example illustrated in FIG. 7, if a failure represented by the failure main-cause code "0x0001" occurs in the component represented by the component code "0x02", the standby time table 22 indicates that the standby time is "1000" milliseconds.

As described above, the standby time table 22 stores therein a component in which a failure has been detected and the standby time in accordance with the failure main cause. Then, the failure analyzing unit 16 has a process on standby that determines whether the detected failure is the source of the failure or a propagated failure. The process is on standby for the period of standby time in accordance with both the component, in which the failure has been detected, and the failure main cause. Consequently, the failure point detecting device 10 can efficiently specify a failure-source component.

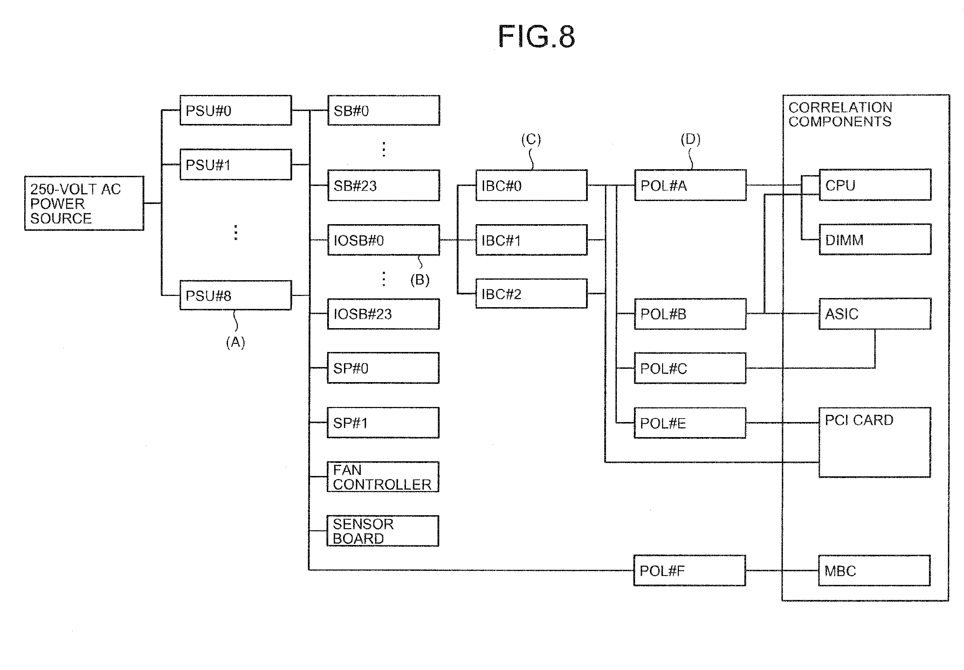

In the following, an example of calculating the standby time stored in the standby time table 22 will be described with reference to FIG. 8. FIG. 8 is a schematic diagram illustrating a standby time. In the example illustrated in FIG. 8, the monitored target device 1 includes the correlation components and a power supply system that includes the connection relationship illustrated in FIG. 4.

For example, if the PSU #8 illustrated in (A) of FIG. 8 fails, the failures propagates to the IOSB #0 illustrated in (B) of FIG. 8, the failure then propagates to the IBC #0 illustrated in (C) of FIG. 8, and then the failure propagates to the POL #A illustrated in (D) of FIG. 8. Consequently, if the PSU #8, which is in the higher level than the POL #A and the IBC #0, fails, it is not possible to detect the failure in a device to which the failure possibly propagates unless a standby time longer than that is set for the POL #A, the IBC #0, and the IOSB #0.

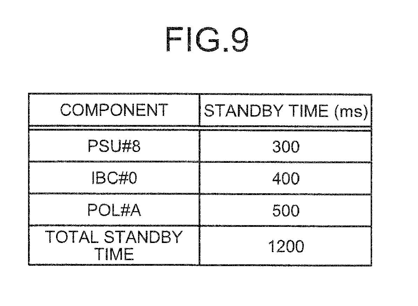

Consequently, for components in a path, from the top level to the lowest level to which the failure propagates when a component fails, the standby time table 22 stores therein, as a standby time of the failed component, the total time before a failure propagates to other components if a component fails. In the following, an example of a process for calculating the standby time of each component will be described with reference to FIG. 9.

FIG. 9 is a schematic diagram illustrating an example of the standby time. In the example illustrated in FIG. 9, if the PSU #8 fails, the PSU #8 propagates the failure to another component in 300 milliseconds, the IBC #0 propagates the failure to another component in 400 milliseconds, and the POL #A propagates the failure to another component in 500 milliseconds. In such a case, 1200 milliseconds, which is the total time taken for the PSU #8, the IBC #0, and the POL #A to propagate the failure to other components, is set as the standby time for the PSU #8.

In the example illustrated in FIG. 9, the standby time is calculated with the assumption that only the component to which a failure propagates is taken into consideration; however, the embodiment is not limited thereto. It may also be possible to calculate the standby time by taking into consideration a failure main cause. For example, for a failure main cause, such as a power supply loss, that immediately propagates the failure to the other components, it may also be possible to use a value obtained by decreasing or increasing the standby time by a predetermined rate.

In the following, by referring back to FIG. 1, a description will be given of a process performed by the failure point detecting unit 17, the timer processing unit 18, and the output unit 19 included in the failure analyzing unit 16. If the failure detecting unit 11 detects a failure, the failure point detecting unit 17 identifies components detected by the failure detecting unit 11 until the standby time that is in accordance with the failed component has elapsed. Then, after the standby time has elapsed, the failure point detecting unit 17 identifies, from among the identified components, a component that is not included in propagation target point of the failed component.

Specifically, the failure point detecting unit 17 receives, from the failure detecting unit 11, both a component code and a failure main-cause code and notifies the timer processing unit 18 of the component code and the failure main-cause code, thereby starting a timer. Furthermore, the failure point detecting unit 17 accesses the failure analysis database 21 and stores a circle in the failure mark column of any entry that is associated with the received component code and failure main-cause code, thereby identifying a component to which a failure propagates.

Then, the failure point detecting unit 17 performs the following process until it receives, from the timer processing unit 18, a time-out notification indicating that the standby time has elapsed. First, if the failure point detecting unit 17 receives, from the failure detecting unit 11, a new component code and a new failure main-cause code, the failure point detecting unit 17 stores a circle in the failure mark column of any entry associated with the new component code and the new failure main-cause code.

Furthermore, the failure point detecting unit 17 identifies an entry in which a circle is stored in the failure mark column and then specifies the component code of a component that contains a circle in the propagation target point and the correlation components in the identified entry. Specifically, the failure point detecting unit 17 specifies a component to which a failure propagates if a component fails whose failure has been detected by the failure detecting unit 11.

Then, by determining whether a newly received component code is contained in the specified component code, the failure point detecting unit 17 determines whether the newly detected failure is due to propagation. If the newly received component code is contained in the specified component code, the item of the failure mark of the entry in which the newly received component code and failure main-cause code are stored is changed to "applicable" by the failure point detecting unit 17.

In contrast, if a newly received component code is not contained in the specified component code, i.e., if a newly detected failure is not due to propagation, the failure point detecting unit 17 performs the following process. First, by transmitting both the newly received component code and the failure main-cause code to the timer processing unit 18, the failure point detecting unit 17 starts a new timer. Then, the failure point detecting unit 17 accesses the failure analysis database 21, stores a circle in the failure mark column of an entry that is associated with the new component code and the failure main-cause code, and identifies a component to which the failure propagates.

In contrast, when receiving, from the timer processing unit 18, a time-out notification indicating that a standby time has elapsed, the failure point detecting unit 17 performs the following process. First, the failure point detecting unit 17 clears the failure marks represented by "applicable" in the failure analysis database 21. Then, the failure point detecting unit 17 specifies an entry containing the component code and the failure main-cause code indicated as a notification received when the timer is set when the time-out notification is received and then determines whether the failure information of the specified entry is "0".

If the failure information of the specified entry is "0", the failure point detecting unit 17 determines, from among the entries in which a circle is stored in the failure mark column, whether the priority of the specified entry is the highest. Thereafter, if the priority of the specified entry is the highest, the failure point detecting unit 17 outputs the message code of the specified entry to the output unit 19. Furthermore, the failure point detecting unit 17 stores "1" in the failure information in the selected entry and deletes the failure mark. In contrast, if the failure point detecting unit 17 determines that an entry having the priority higher than that of the specified entry is present, the failure point detecting unit 17 does not output the message code.

Furthermore, if an entry, which stores therein both the component code and the failure main-cause code received from the failure detecting unit 11, is not stored in the failure analysis database 21, the failure point detecting unit 17 notifies the output unit 19 that a not-yet registered event has occurred.

The timer processing unit 18 acquires, from the standby time table 22, a standby time in accordance with a component in which a failure has been detected by the failure detecting unit 11 and counts the acquired standby time. Specifically, the timer processing unit 18 receives, from the failure point detecting unit 17, both a failure main-cause code and a component code of a component in which a failure has been detected by the failure detecting unit 11. Then, the timer processing unit 18 acquires, from the standby time table 22, a standby time associated with the received component code and the failure main-cause code and starts to count the acquired standby time.

Furthermore, if the timer processing unit 18 receives a new component code and a new failure main-cause code from the failure point detecting unit 17 during the counting of the standby time, the timer processing unit 18 acquires, from the standby time table 22, a standby time associated with the newly received component code and the failure main-cause code. Then, the timer processing unit 18 counts the newly acquired standby time separately from the standby time that is already being counted. Then, when the counting ends, the timer processing unit 18 notifies the failure point detecting unit 17 of a time-out.

Furthermore, the timer processing unit 18 issues a time-out as a notification such that it is possible to identify which component code and failure main-cause code relates to the counted standby time. For example, the timer processing unit 18 may also send, as a notification, a time out together with the component code and the failure main-cause code, both of which are stored in the standby time table 22 and are associated with the counted standby time.

If the output unit 19 receives a message number from the failure point detecting unit 17, the output unit 19 issues a report on the failure by using the received message number. For example, the output unit 19 outputs the received message number to the notifying unit 23, the LED control unit 24, the operating unit 25, and the error log storing unit 26.

Then, the notifying unit 23 outputs a warning beep or the displays the nature of the failure represented by the message number received from the output unit 19 and notifies a user that a failure has occurred. Furthermore, the LED control unit 24 performs a warning by turning on or flashing an LED in accordance with the nature of the failure represented by the message number. Furthermore, in accordance with the nature of the failure represented by the received message number, the operating unit 25 performs a control, such as shutdown, power off, or reset, of the monitored target device 1.

The error log storing unit 26 stores therein a log of a failure occurring in the monitored target device 1 by storing a message number. If the output unit 19 receives, from the failure point detecting unit 17, a notification that a not-yet registered event has occurred, the notifying unit 23 notifies, by using the LED control unit 24, a user that the not-yet registered event has occurred.

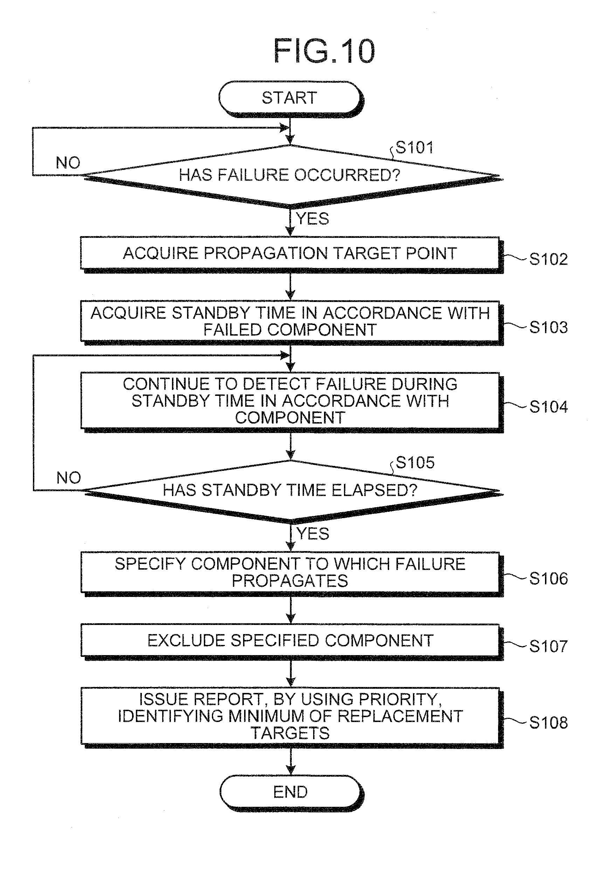

In the following, the flow of a process performed by the failure point detecting device 10 will be described with reference to FIG. 10. FIG. 10 is a flowchart illustrating the flow of a process performed by the failure point detecting device. First, the failure point detecting device 10 determines whether a failure has occurred (Step S101). If a failure has not occurred (No at Step S101), the failure point detecting device 10 again determines whether a failure has occurred. When the failure point detecting device 10 determines that a failure has occurred (Yes at Step S101), the failure point detecting device 10 acquires a propagation target point (Step S102) and acquires a standby time in accordance with the failed component (Step S103).

Then, the failure point detecting device 10 continues to detect a failure during the standby time in accordance with the component (Step S104). Then, the failure point detecting device 10 determines whether the standby time has elapsed (Step S105). If the standby time has not elapsed (No at Step S105), the failure point detecting device 10 performs the process at Step S104. In contrast, if the standby time has elapsed (Yes at Step S105), the failure point detecting device 10 specifies a component to which the failure propagates (Step S106) and excludes the component to which the failure has propagated from the target for the failure (Step S107). Then, the failure point detecting device 10 issues a report, by using a priority, identifying the minimum of replacement targets (Step S108) and ends the process.

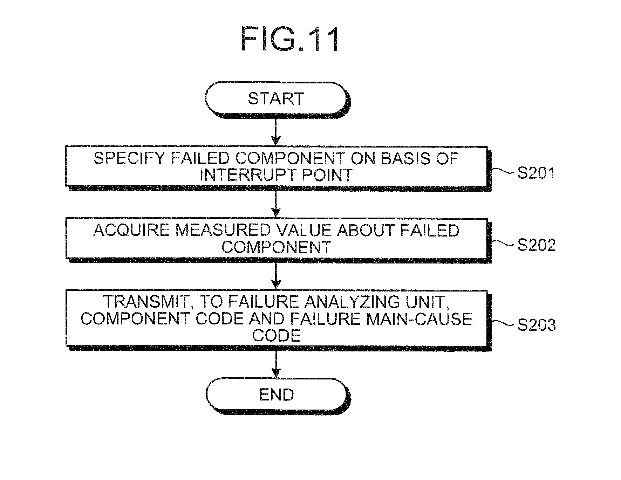

In the following, the flow of a process performed by the failure detecting unit 11 will be described with reference to FIG. 11. FIG. 11 is a flowchart illustrating the flow of a process that is performed by a failure detecting unit and that detects a failure. First, if the failure detecting unit 11 receives an interruption notification, the failure detecting unit 11 specifies the failed component on the basis of an interrupt point (Step S201). Then, the failure detecting unit 11 acquires a measured value about the specified component obtained by a sensor (Step S202). Then, the failure detecting unit 11 transmits, to the failure analyzing unit 16, both the component code of the specified component and the failure main-cause code obtained from the measured value by the sensor (Step S203) and ends the process.

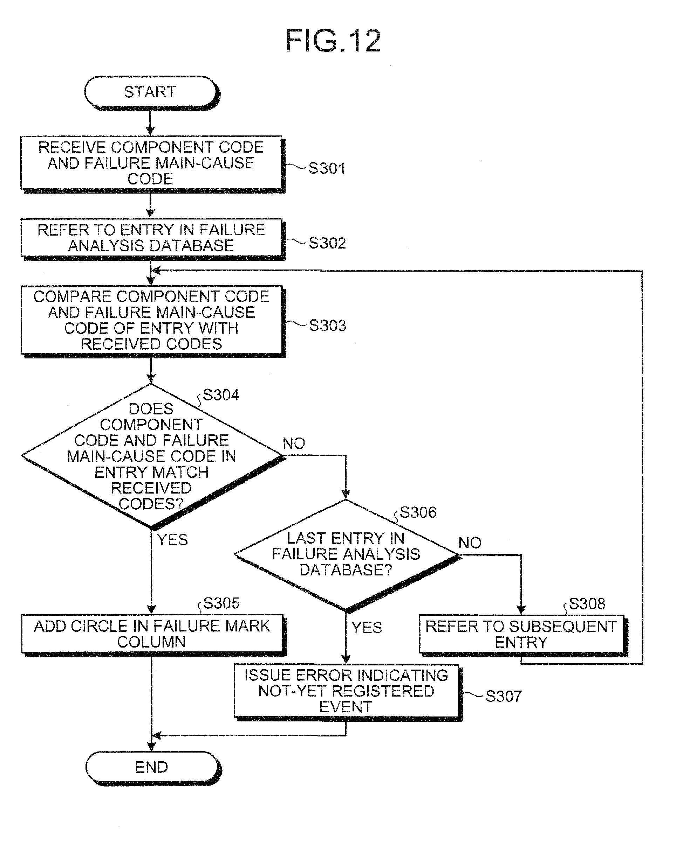

In the following, the flow of a process performed by the failure analyzing unit 16 when it receives, from the failure detecting unit 11, both the component code and the failure main-cause code will be described with reference to FIG. 12. First, the failure analyzing unit 16 receives both the component code and the failure main-cause code (Step S301). Then, the failure analyzing unit 16 refers to a single entry in the failure analysis database 21 (Step S302) and the failure analyzing unit 16 compares the component code and the failure main-cause code of the entry with the received component code and the failure main-cause code, respectively (Step S303).

Then, if the component code and the failure main-cause code in the entry matches the received codes (Yes at Step S304), the failure analyzing unit 16 adds a circle in the failure mark column (Step S305) and ends the process. In contrast, if the component code and the failure main-cause code of the entry does not match the received code (No at Step S304), the failure analyzing unit 16 determines whether the referred entry is the last entry in the failure analysis database 21 (Step S306).

If the referred-to entry is the last entry in the failure analysis database 21 (Yes at Step S306), the failure analyzing unit 16 issues an error indicating a not-yet registered event to a user (Step S307) and ends the process. Furthermore, if the referred-to entry is not the last entry in the failure analysis database (No at Step S306), the failure analyzing unit 16 refers to the subsequent entry (Step S308) and ends the process at Step S303.

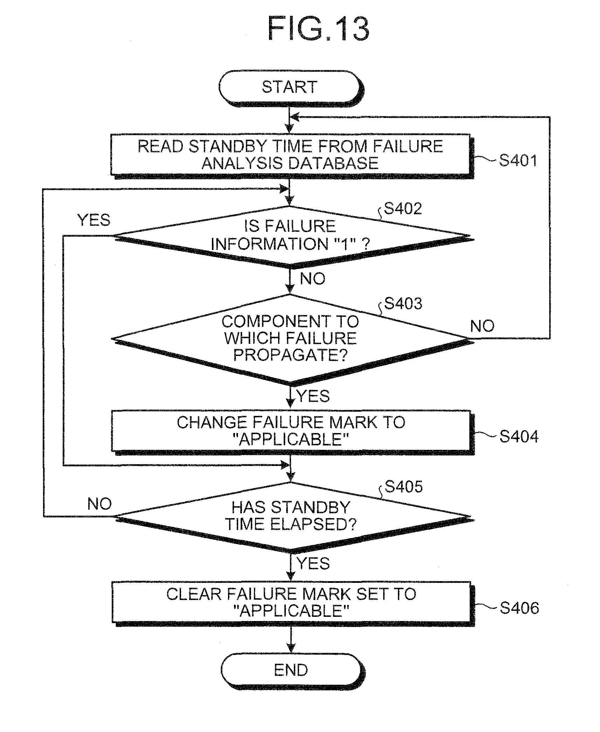

In the following, the flow of a process performed by the failure analyzing unit 16 during the counting of a standby time will be described with reference to FIG. 13. FIG. 13 is a flowchart illustrating the flow of a process performed during a counting. First, the failure analyzing unit 16 reads the standby time from the failure analysis database 21 (Step S401) and starts to count. At this point, if the failure analyzing unit 16 receives both the newly received component code and the failure main-cause code, the failure analyzing unit 16 performs the following process. First, the failure analyzing unit 16 refers to the failure analysis database 21 and determines whether failure information "1" is stored in an entry, which stores therein the newly received component code and the failure main-cause code (Step S402).

If the failure information is not "1" (No at Step S402), the failure analyzing unit 16 determines whether the component represented by the received component code is a component to which a failure propagates (Step S403). Then, if the failure analyzing unit 16 determines that the component represented by the received component code is a component to which a failure propagates (Yes at Step S403), the failure analyzing unit 16 changes the failure mark to "applicable" of the entry that stores therein both the received component code and the failure main-cause code (Step S404).

Then, the failure analyzing unit 16 determines whether the standby time has elapsed (Step S405). If the failure analyzing unit 16 determines that the standby time has elapsed (Yes at Step S405), the failure analyzing unit 16 clears the failure mark set to "applicable" (Step S406) and ends the process. In contrast, if the failure information "1" is stored in the entry, which stores therein a newly received component code and the failure main-cause code (Yes at Step S402), the failure analyzing unit 16 performs the process at Step S405. Furthermore, if the standby time has not elapsed (No at Step S405), the failure analyzing unit 16 performs the process at Step S402 on a newly detected failure.

Furthermore, if the failure analyzing unit 16 determines that the component represented by the received component code is a component to which the failure does not propagate (No at Step S403), the failure analyzing unit 16 performs the process at Step S401. Specifically, the failure analyzing unit 16 reads, from the standby time table, the standby time that is associated with the newly received component code and the failure main-cause code and starts to count separately (Step S401).

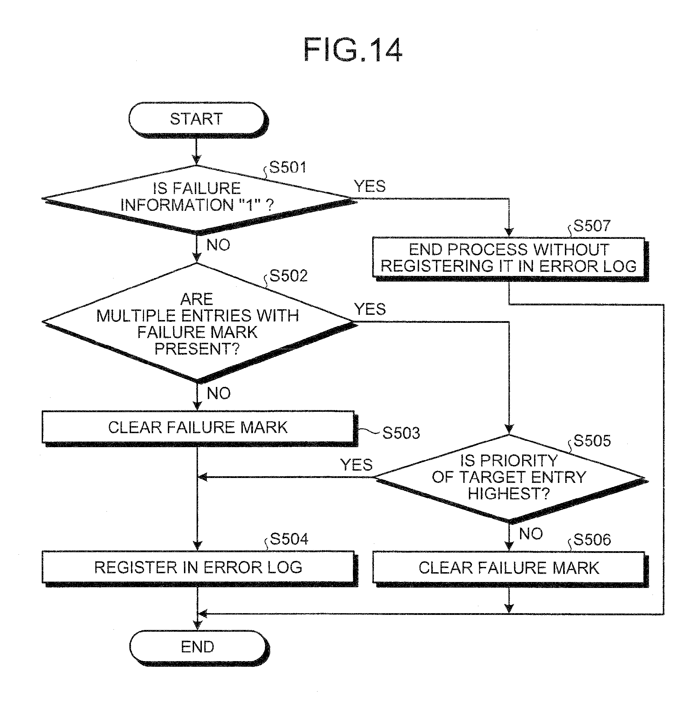

In the following, the flow of a process for determining, by the failure analyzing unit 16, the minimum of replacement target in accordance with the priority will be described with reference to FIG. 14. FIG. 14 is a flowchart illustrating the flow of a process that determines the minimum replacement target in accordance with priority. The failure analyzing unit 16 performs the process illustrated in FIG. 14 on an entry, as an entry to be processed, which stores therein the failure main-cause code and the component code related to the standby time that was counted by the time-out timer.

First, the failure analyzing unit 16 determines whether the failure information on the target entry is "1" (Step S501). If the failure information is not "1" (No at Step S501), the failure analyzing unit 16 determines whether multiple entries that contains a circle in the failure mark column are present (Step S502). If an entry that stores therein a circle in the failure mark column is only the target entry (No at Step S502), the failure analyzing unit 16 clears the failure mark of the entry (Step S503). Then, the failure analyzing unit 16 registers, in the error log, the nature of the failure represented by the message number of the target entry (Step S504) and ends the process.

In contrast, if multiple entries containing a circle in the failure mark column are present (Yes at Step S502), the failure analyzing unit 16 determines whether the priority of the target entry is the highest from among the entries containing a circle in the failure mark column (Step S505). If an entry having a priority higher than that of the target entry is present (No at Step S505), the failure analyzing unit 16 clears the failure mark of the target entry (Step S506) and ends the process. Furthermore, if the priority of the target entry is the highest (Yes at Step S505), the failure analyzing unit 16 performs the process at Step S504. Furthermore, if the failure information is "1" (Yes at Step S501), the failure analyzing unit 16 ends the process without registering it in the error log (Step S507).

### Advantage of the first embodiment

As described above, the failure point detecting device 10 stores therein the failure analysis database 21 that indicates, when one of the components 2 to 7 in the monitored target device 1 initially fails, the other components to which the failure propagates. Furthermore, when one of the components 2 to 7 fails, the failure point detecting device 10 stores therein, as the standby time table 22, a standby time for standing by until the failure propagates to another component. If the failure point detecting device 10 detects a failure in one of the components 2 to 7 in the monitored target device 1, the failure point detecting device 10 acquires, from the failure analysis database 21, information on the other components to which the failure propagates from the component in which the failure has been detected and acquires, from the standby time table 22, a standby time for the component in which the failure has been detected.

Then, the failure point detecting device 10 continues to identify components, in which a new failure has been detected, until the standby time has elapsed. After the standby time has elapsed, the failure point detecting device 10 specifies a component that is from among the identified components and that is other than the component whose information is acquired from the failure analysis database 21. In this way, because the failure point detecting device 10 stands by for a standby time in accordance with a failed component, it is possible to efficiently specify the component that is the source of the failure.

Furthermore, if the failure point detecting device 10 detects a new failure before a standby time has elapsed, the failure point detecting device 10 determines whether the component in which the new failure has been detected is the component to which the failure propagates from a component in which the failure has already been detected. If the component in which the new failure has been detected is a component to which the failure propagates from a component in which the failure has already been detected, the failure point detecting device 10 excludes the component in which the new failure has been detected from the target for issuing a reporting. Then, from among the components in which the failure has been detected during the standby time, the failure point detecting device 10 issues a report about a component that was not excluded from the report. Consequently, even if the source of the failure occurs in multiple components, the failure point detecting device 10 issues, to a user, a report containing each of the components that has failed.

Furthermore, if a component, in which the new failure has been detected, is not the component to which the failure propagates from another component in which the failure has already been detected, the failure point detecting device 10 acquires a standby time and information on the components to which the failure propagates from the component in which the new failure has been detected. Then, by using the information and the standby time for the newly acquired component, the failure point detecting device 10 determines whether a failure that has subsequently been detected is a failure caused by propagation. Consequently, even if the source of the failure occurs in multiple components, the failure point detecting device 10 can efficiently specify the components in which the source of the failure has occurred.

Furthermore, from among components to which a failure propagates when a component fails, the failure point detecting device 10 stores therein, as the standby time, the total time taken by components located in a path from the lowest to the highest hierarchy to propagate a failure. Consequently, for the components located in a higher level in the hierarchy, the failure point detecting device 10 stands by for a longer time than that for the other components. In contrast, for the components located in a lower hierarchy, the failure point detecting device 10 stands by for a shorter time than that for the other components. Consequently, the failure point detecting device 10 can specify, within an appropriate standby time, a component in which the source of the failure has occurred.

Furthermore, the failure point detecting device 10 stores therein the priority of a failed component and issues a report about, from among the specified components, the component to which the highest priority is given. Consequently, the failure point detecting device 10 can notify, with priority, a user of a component to be notified first.

Furthermore, the failure point detecting device 10 performs weighting on each component in accordance with the degree of severity of a failure and uses, as a priority, the sum of the weighting values given to the components to which a failure propagates. Consequently, the failure point detecting device 10 can notify, with priority, a user of a component in which a further severe failure will possibly occur when the component fails.

Furthermore, the failure point detecting device 10 stores therein, for each combination of a component and the failure main cause of the component, a standby time and a component to which the failure propagates. Then, in accordance with the detected failure main cause and the component in which a failure has been detected, the failure point detecting device 10 acquires the standby time and the component to which the failure propagates. Consequently, because the failure point detecting device 10 can determine, while using a standby time that takes into consideration the failure main cause, whether the detected failure is a propagated failure, the failure point detecting device 10 can more efficiently specify the component that is the source of the failure.

Furthermore, from among the specified components, the failure point detecting device 10 sends a notification only about the component whose report has not already been issued. Consequently, the failure point detecting device 10 can reduce a load due to issuing the same report many times.

Furthermore, if the failure point detecting device 10, from the monitored target device 1, receives a failure notification due to an interrupt, the failure point detecting device 10 specifies the failed component from the failure notification and determines whether the specified component is operating normally. Consequently, the failure point detecting device 10 appropriately detects a failure occurring in the monitored target device 1.

### [b] Second Embodiment

In the above explanation, a description has been given of the embodiment according to the present invention; however, the embodiments are not limited thereto and can be implemented with various kinds of embodiments other than the embodiment described above. Therefore, another embodiment will be described below.

### (1) Detecting a failure

The failure point detecting device 10 described above detects a failure triggered when an interruption notification is received from the monitored target device 1; however, the embodiment is not limited thereto. For example, the failure point detecting device 10 may also detect using polling. Furthermore, the failure point detecting device 10 always monitors sensors in the monitored target device 1. When detecting an abnormality, the failure point detecting device 10 may also determine that a failure has been detected.

### (2) Failure analysis database and standby time table

The failure point detecting device 10 described above stores the failure analysis database 21 and the standby time table 22 as different pieces of data; however, the embodiment is not limited thereto. For example, the failure point detecting device 10 may also collectively store the failure analysis database 21 and the standby time table 22 in the same data. Furthermore, the failure point detecting device 10 may also integrate the function performed by the failure point detecting unit 17 and the timer processing unit 18.

Furthermore, the first embodiment, for which the information stored in the failure analysis database 21 and the standby time table 22 are described, is only an example. A given value can be set by implementing the monitored target device 1. Specifically, by setting a value, which is in accordance with the implementation of the monitored target device 1, in the failure analysis database 21 and the standby time table 22, when a failure has occurred in a component, the failure point detecting device 10 can efficiently specify the component in which the source failure has occurred.

### (3) Failure point detecting device

The failure point detecting device 10 described above operates as a different device from the monitored target device 1; however, the embodiment is not limited thereto. For example, the failure point detecting device 10 may also be arranged inside the monitored target device 1 or may also operates as a part of the monitored target device 1.

### (4) Program

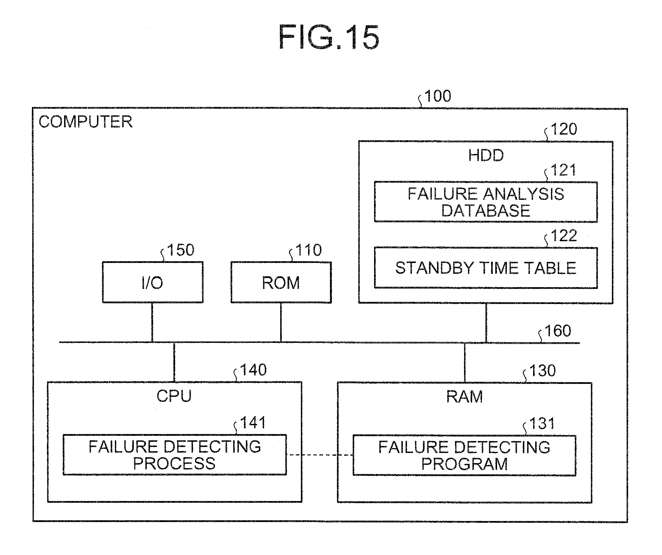

In the above explanation, a description has been given of a case in which the failure point detecting device 10 according to the first embodiment implements various processes by using hardware; however, the embodiment is not limited thereto. For example, the processes may also be implemented by a program prepared in advance and executed by a computer. Accordingly, in the following, an example of a computer that executes a program having the same function as that performed by the failure point detecting device 10 according to the first embodiment will be described with reference to FIG. 15. FIG. 15 is a block diagram illustrating an example of a computer that executes a failure detecting program.

A computer 100 illustrated in FIG. 15 as an example includes a read only memory (ROM) 110, a hard disk drive (HDD) 120, a random access memory (RAM) 130, and a central processing unit (CPU) 140, which are connected by a bus 160. Furthermore, the computer 100 illustrated in FIG. 15 as an example includes an input output (I/O) 150 that issues a report about a failed component to a user.

The HDD 120 stores therein a failure analysis database 121 that contains the same information as that stored in the failure analysis database 21 illustrated in FIG. 1 and a standby time table 122 that contains the same information as that stored in the standby time table 22 illustrated in FIG. 1. The RAM 130 previously stores therein a failure detecting program 131. In the example illustrated in FIG. 15, the CPU 140 reads the failure detecting program 131 from the RAM 130 and executes it so that the failure detecting program 131 functions as a failure detecting process 141. The failure detecting process 141 performs the same process performed by the failure detecting unit 11 and the failure analyzing unit 16 illustrated in FIG. 1.

The failure detecting program described in the embodiment can be implemented by program prepared in advance and executed by a computer, such as a personal computer or a workstation. The program can be distributed via a network, such as the Internet. Furthermore, the program is stored in a computer-readable recording medium, such as a hard disk, a flexible disk (FD), a compact disc read only memory (CD-ROM), a magneto optical disc (MO), and a digital versatile disc (DVD). Furthermore, the program can also be implemented by a computer reading it from the recording medium.

Furthermore, the failure detecting program can function not only as an application program but also as a part of the functions included in the operating system (OS) or as a part of firmware. Furthermore, the failure detecting program may also be executed by a computer operating as a different device from the device that includes a component to be monitored or may also be executed by a computer that includes a component to be monitored.

According to an aspect of the embodiment, it is possible to efficiently specify a failure-source component.

## Claims

1. A failure detecting device (10) comprising:
a storing unit (20) that stores, for each component, propagation information indicating, when one of the components included in an information processing apparatus fails, the other components to which the failure propagates, and a standby time for standing by, when the one of the components fails, until the failure propagates to the other components;
a detecting unit (11) that detects the failure of a component;
an acquiring unit (16) that acquires, when a first failure was detected by the detecting unit (11), propagation information stored by the storing unit (20) about a component in which the first failure has been detected and a standby time stored by the storing unit (20) about the component in which the first failure has been detected;
a determining unit (17) that determines notification candidates including a component in which a failure has been detected first by the detecting unit (11) and a component in which a new failure has been detected by the detecting unit (11) before the standby time acquired by the acquiring unit (16) has elapsed; and
a notifying unit (19) that notifies, as a failed component from among the notification candidates determined by the determining unit (17) a user of a component that is not included in the propagation information acquired by the acquiring unit (16) after the standby time has elapsed.

2. The failure detecting device (10) according to claim 1, wherein, the notifying unit (19) determines, when the a new failure is detected by the detecting unit (11), whether a component in which the new failure has been detected by the detecting unit (11) is included in the propagation information acquired by the acquiring unit (16), and, excluding, when it is determined by the determining unit that the component in which the new failure has been detected by the detecting unit (11) is included in the propagation information acquired by the acquiring unit (16), the component in which the new failure has been detected by the detecting unit (11) from the notification candidate.

3. The failure detecting device (10) according to claim 2, wherein
the acquiring unit (16) acquires, when the component in which the new failure has been detected by the detecting unit (11) is not included in the propagation information, a newly standby time and a newly propagation information about the component in which the new failure has been detected by the detecting unit (11),
the determining unit (17) determines notification candidates inluding the component in which the new failure has been detected by the detecting unit (11) and a component in which a failure has been detected by the detecting unit (11) during the newly standby time acquired by the acquiring unit (16), and
the notifying unit (19) notifies, as a failed component the user of a component that is not included in the newly propagation information acquired by the acquiring unit (16), from among the notification candidates determined by the determining unit (17) after the newly standby time has elapsed,.

4. The failure detecting device (10) according to any one of claims 1 to 3, wherein
the storing unit (20) stores therein the propagation information indicating, in accordance with hierarchy that is based on a connection relationship, the other components to which the failure propagates when the component fails, and the total time period, as a standby time for a component, for which a failure propagates to another device from the components, among the other components to which the failure propagates when the component fails, that are positioned in a path from the lowest hierarchical level to the highest hierarchical level.

5. The failure detecting device (10) according to any one of claims 1 to 4, wherein,
the storing unit (20) stores therein, for each component included in the information processing apparatus, a replacement priority of a failed component, and
the notifying unit (19) notifies, as a failed component, the user of a component that has the highest priority that is stored in the storing and is not included in the propagation information acquired by the acquiring unit (16), from among the notification candidates determined by the determining unit (17), after the standby time has elapsed .

6. The failure detecting device (10) according to claim 5, wherein, for the other components to which the failure propagates when the component fails, the storing unit (20) stores therein, as the priority of the component, a value obtained by calculating the sum of weighting values given to the components.

7. The failure detecting device (10) according to any one of claims 1 to 6, wherein
the storing unit (20) stores therein, for each component and the main cause of a failure of the component, the propagation information, and , for each component and the main cause of a failure of the component, the standby time for standing by until the failure propagates to the other components,
the detecting unit (11) detectes the failure of the component and the main cause of the failure of the component, and
the acquiring unit (16) acquires the propagation information, that is associated with the component in which the failure has been detected by the detecting unit (11) and that is associated with the main cause detected by the detecting unit (11), and a standby time, that is associated with the component in which the failure has been detected by the detecting unit (11) and that is associated with the main cause detected by the detecting unit (11).

8. The failure detecting device (10) according to any one of claims 1 to 7, wherein the notifying unit (19) notifies the user of a component, from among the notification candidates, that is not included in the propagation information acquired by the acquiring unit (16) and that has not already been notified to the user.

9. The failure detecting device (10) according to any one of claims 1 to 8, wherein,
the detecting unit (11) specifies, when a failure notification due to an interrupt is received, a failed component from the failure notification,
the notifying unit (19) determines whether the component specified by the detecting unit (11) is operating normally, and, determining, when the component specified by the detecting unit (11) is not operating normally, that the component specified by the detecting unit (11) has failed.

10. A failure detecting method performed by a failure detecting device (10), the failure detecting method comprising:
acquiring, when a failure of one of components included in an information processing apparatus has been detected first, propagation information about the component in which the failure has been detected, from a first storage device that stores therein, for each component, propagation information indicating, when one of the components included in the information processing apparatus fails, the other components to which the failure propagates;
reading a standby time for the component in which the failure has been detected, from a second storage device that stores therein, for each component, a standby time for standing by, when the one of the components included in the information processing apparatus fails, until the failure propagates to the other components;
determining notification candidates including the component in which the failure has been detected first and a component that has newly failed before the read standby time by the reading has elapsed, and
notifying, as a failed component from among the notification candidates, a user of a component that is not included in the propagation information acquired after the read standby time by the reading has elapsed.

11. A collecting program causing a computer (100) to execute a process, the process comprising:
acquiring, when a failure of one of the components included in an information processing apparatus has been detected first, propagation information about the component in which the failure has been detected, from a first storage device that stores therein, for each component, propagation information indicating, when one of the components included in the information processing apparatus fails, the other components to which the failure propagates;
reading a standby time for the component in which the failure has been detected, from a second storage device, that stores therein, for each component, a standby time for standing by, when the one of the components included in the information processing apparatus fails, until the failure propagates to the other components;
determining notification candidates including the component in which the failure has been detected first and a component that has newly failed before the read standby time has elapsed; and
notifying, as a failed component from among the notification candidates, a user of a component that is not included in the propagation information acquired after the read standby time has elapsed.
